# EUROPEAN PATENT APPLICATION

(11) **EP 2 490 105 A1**
(43) Date of publication of application: **22.08.2012**
(21) Application number: 11154133.0
(22) Date of filing: 11.02.2011
(51) Int. Cl.: G06F 3/02, H01H 13/702

(54) **Keypad having a metal grid for use with a portable electronic device**

(71) Applicant: Research In Motion Limited, Waterloo, ON N2L 3W8 (CA)
(72) Inventor: Chen, Chao, Waterloo Ontario N2L 3L3 (CA); Huang, Li, Waterloo Ontario N2L 3L3 (CA)
(74) Representative: Noble, Nicholas

(57) **Abstract**

A keypad for a portable electronic device includes a keymat having a plurality of actuation members and a plurality of key caps. Each of the plurality of key caps is associated with a respective one of the plurality of actuation members. The keypad further includes a metal grid disposed between the plurality of key caps and the keymat. The metal grid is adhered to a bottom surface of each of the plurality of key caps.

## Description

### Field

This disclosure relates generally to keypads for use with portable electronic devices and, more particularly, to a keypad with a metal grid.

### Background Information

Electronic devices, including portable electronic devices, have gained widespread use and at least some provide a variety of functions including, for example, telephoning, electronic messaging, and other personal information manager application functions. Portable electronic devices include, for example, cellular telephones, smart phones, wireless personal digital assistants, and laptop computers with wireless capabilities. Typically, portable electronic devices employ a keypad or keyboard to input data into the device.

Efforts have been made to reduce the size of existing portable electronic devices by designing keypads with thinner profiles. One keypad design is a keypad having a film style configuration. These keypads include a thin plastic sheet attached to the bottom surface of key covers and to the corresponding key bodies. The plastic sheet has flexibility so that when a key cover is pressed, the plastic sheet permits the key cover to be moved toward the interior of the portable electronic device.

In existing "film style" keypad design, the entire bottom surface of a key cover is secured to the plastic sheet. Thus, when a user depresses a key cover, the plastic sheet pulls adjacent key covers towards the interior of the portable electronic device as the pressed key moves in a vertical direction. This provides poor tactile feel to the user of the portable electronic device. Moreover, the plastic sheet is generally weak to resist deformation in a plane parallel to the portable electronic device. As a result, key covers are loosely held by the plastic sheet. This too provides poor tactile feel for the user of the portable electronic device.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:

Fig. 1 is a top view of a portable electronic device having an example of a keypad, consistent with disclosed embodiments;

Fig. 2 is a block diagram of the portable electronic device of Fig. 1, consistent with disclosed embodiments;

Fig. 3 is an exploded view of the keypad of Fig. 1, consistent with disclosed embodiments;

Fig. 4 is a section view of the keypad of Fig. 1, consistent with disclosed embodiments;

Fig. 5 is a section view of the keypad of Fig. 1 while a key cap is being depressed, consistent with one disclosed embodiment; and

Fig. 6 is a section view, similar to Fig. 5, consistent with another disclosed embodiment.

### DETAILED DESCRIPTION

Reference will now be made in detail to exemplary embodiments, examples of which are illustrated throughout the drawings. Wherever possible, the same reference numbers are used in the drawings and the description to refer to the same or like parts.

The disclosure generally relates to a portable electronic device. Examples of portable electronic devices include mobile (e.g., handheld) wireless communication devices such as pagers, mobile phones, mobile smart-phones, wireless organizers, personal digital assistants, wireless-enabled notebook computers, and any other known communication device having a keypad.

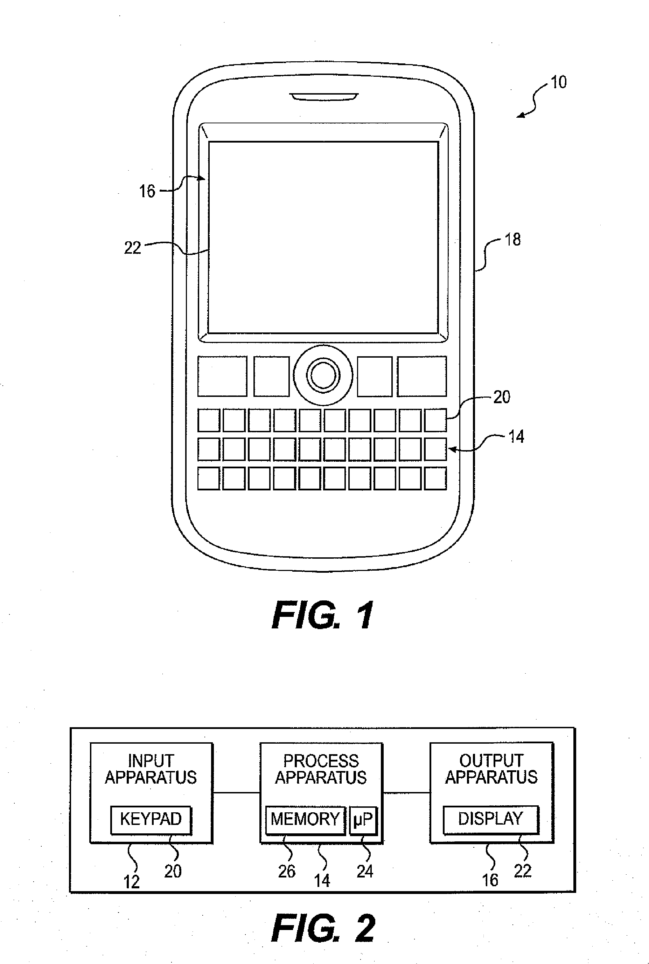

An exemplary portable electronic device 10 is illustrated generally in Figure 1 and is depicted schematically in Fig. 2. The portable electronic device 10 includes an input apparatus 12, an output apparatus 16, and a processor apparatus 14, all of which are disposed and supported by a housing 18. The input apparatus 12 includes a keypad 20. Keypad 20 can be a numeric keypad, an alphabetic keypad, an alphanumeric keypad, a QWERTY keypad, or any other keypad configuration incorporating one of these layouts or portions thereof. Input apparatus 12 can additionally include a track ball or optical trackpad, as well as other known input members. The output apparatus 16 includes a display 22, which can be a non-touch or a touchscreen display. Output apparatus 16 can additionally include, for instance, one or more visual outputs such as lights and one or more audible outputs such as a speaker, as well as other output devices.

The processor apparatus 14 includes a processor 24, such as a microprocessor (µP) or other processor. Processor apparatus 14 further includes a memory 26. Memory 26 can be any one or more of a variety of types of internal or external storage media such as, without limitation, RAM, ROM, EPROM(s), EEPROM(s), and the like that provide a storage register for data storage such as in the fashion of an internal storage area of a computer, and can be volatile memory or nonvolatile memory. As a general matter, memory 26 has stored therein a number of routines that are executable on processor 24. The processor apparatus 14 receives input signals from the input apparatus 12 and processes output signals sent to the output apparatus 16.

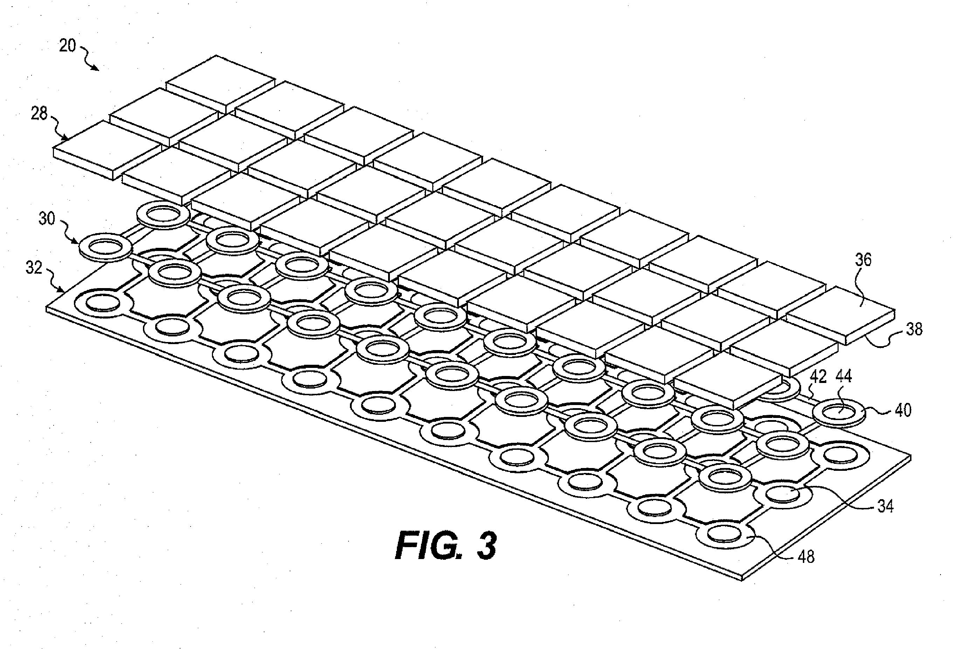

Fig. 3 is an exploded view of keypad 20 of portable electronic device 10. Keypad 20 is a thin "film style" keypad that includes an assembly of multiple components including a plurality of key caps 28, a metal grid 30, and a keymat 32 defining a plurality of actuation members 34.

As illustrated in Fig. 3, keypad 20 has a plurality of individual key caps 28. Key caps 28 are comprised of a relatively rigid material, such as hard resin or another relatively rigid material. In some embodiments, key caps 28 are comprised of a polycarbonate type hard resin. It is contemplated that one or more objects may appear on each key cap 28. The objects include, for example and without limitation, key graphics, characters, letters, strokes, ideograms, digits, and the like.

Each of the key caps 28 is aligned with a respective one of the actuation members 34 of keymat 32. In at least some embodiments, key caps 28 are arranged in a plurality of columns and a plurality of rows. In the exemplary embodiment depicted in Figs. 1 and 3, the plurality of columns are each straight and parallel. Additionally, the plurality of rows are each straight and parallel. Key caps 28, however, can be arranged in any layout that is ergonomic, such as curved rows, for example.

Key caps 28 each include a top engagement surface 36 engageable by a user of portable electronic device 10. In the depicted embodiment, engagement surface 36 is planar; however, it is to be understood that engagement surface 36 can have any shape or configuration that provides good tactile feel to a user of portable electronic device 10.

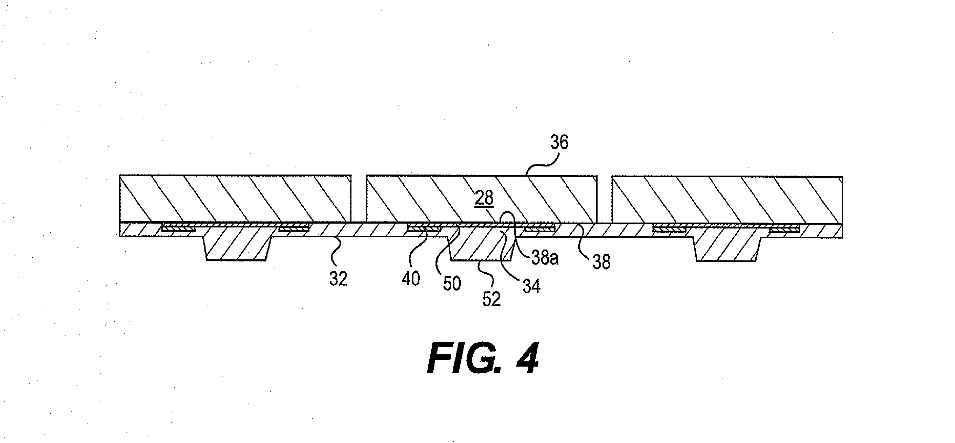

Key caps 28 each include a bottom surface 38 opposite engagement surface 36. In an assembled state, bottom surface 38 of each key cap 28 is adhered to metal grid 30 and keymat 32 (see Fig. 4). As employed herein, the expression "adhered" and variations thereof shall refer broadly to an arrangement in which two or more items are fastened together such as by the use of glue, cement, or other adhesive, or through the use of a fusion or other joining process, and between which an adhesive bond or other fusion bond has been created.

Metal grid 30 is disposed between key caps 28 and keymat 32. Metal grid 30 is formed of a metal alloy. It is understood that the metal alloy can be any metal alloy that resists deformation in a plane parallel to the engagement surface 36, but is sufficiently flexible to deform when a user of portable electronic device 10 depresses one of the plurality of key caps 28 and thereby applies a pressing force to the metal grid 30. Metal grid 30 can be formed by casting, stamping, photochemical milling, machining, or any other suitable process.

Metal grid 30 includes a plurality of attachment sections 40 arranged in a plurality of columns and plurality of rows. Adjacent attachment sections 40 in each of the plurality of columns and plurality of rows are connected by connecting elements 42, thereby forming a grid-like configuration. The configuration of metal grid 30 provides flexibility so that metal grid 30 can deform when a user of portable electronic device 10 depresses one of the plurality of key caps 28, as will be described in further detail below. In the depicted embodiment, attachment sections 40 are uniformly spaced. It is to be understood, however, that attachment sections 40 need not be uniformly spaced in any particular row or column, although it may be preferable to have the sections 40 arranged to correspond with the arrangement of actuation members 34 and key caps 28 associated with metal grid 30. Additionally, in the depicted embodiment, each attachment section 40 has a circular shape. It is to be understood, however, that attachment sections 40 can have an oval shape, rectangular shape, triangular shape, or any other suitable shape. Attachment sections 40 each define a through hole 44, which allows backlighting to of one or more objects (e.g., key graphics). Each through hole 44 is aligned with a respective one of actuating members 34 of keymat 32 so that each one of actuation members 34 can be positioned in a respective through hole 44.

Keymat 32 is disposed below metal grid 30. Keymat 32 is comprised of a relatively flexible and elastic material, such as thermoplastic elastomeric material or another relatively flexible and elastic material. In at least some embodiments, keymat 32 is comprised of silicon rubber. Keymat 32 may be formed by any process, such as injection molding or any other suitable process. In some embodiments, keymat 32 is formed separately from metal grid 30. In other embodiments, keymat 32 is formed around metal grid 30.

Actuation members 34 are integrally formed with keymat 32, and are arranged on keymat 32 in a plurality of rows and a plurality of columns corresponding to the rows and columns of key caps 28 and attachment sections 40. While actuation members 34 are uniformly spaced in the embodiment shown in Fig. 3, it is to be understood that actuation members 34 need not be uniform in a particular row or column. Actuation members 34 each have consistent height and shape, although variations are possible. In at least some embodiments, an upper surface of each of actuation members 34 may be a convex curved surface.

Keymat 32 includes a groove 48 configured to receive metal grid 30. More particularly, groove 48 is shaped to receive attachment sections 40 and connecting elements 42 of metal grid 30.

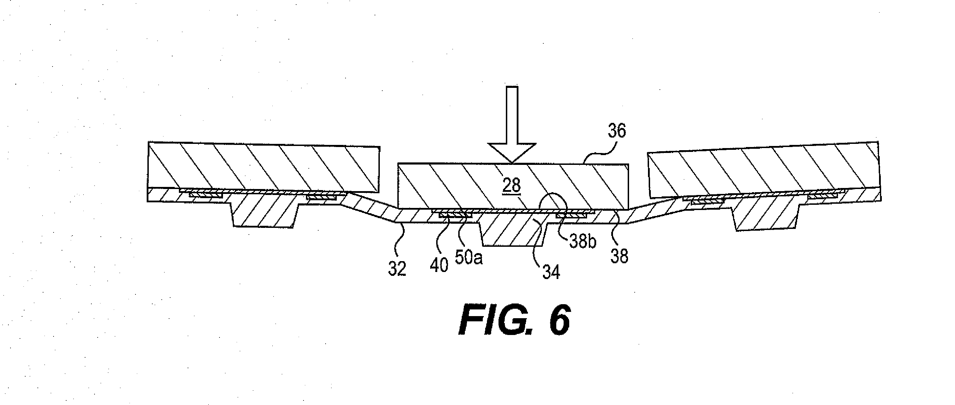

During assembly, metal grid 30 is placed in groove 48 and actuation members 34 are each positioned in through holes 44. An adhesive 50 is applied to a central portion 38a of bottom surface 38 of each key cap 28, as shown in Fig. 4, to adhere each key cap 28 to a respective attachment section 40 of metal grid 30 and to a respective actuation member 34 of keymat 32. In some embodiments, adhesive 50a extends outwardly into an area 38b beyond the attachment section 40, to enhance the bond between key cap 28 and keymat 32, as illustrated in Fig. 6.

Engagement surface 36 is engageable by a user of the portable electronic device 10. A force applied to engagement surface 36 overcomes a bias of a corresponding actuation member 34 in an outward direction and translates actuation member 34 from an unactuated position to an actuated position. A release of the force allows the bias to return the actuation member 34 from the actuated position to the unactuated position. In the actuated position, a contact member 52 of each actuation member 34 closes a circuit of the portable electronic device 10 to provide an input to the processor apparatus 14.

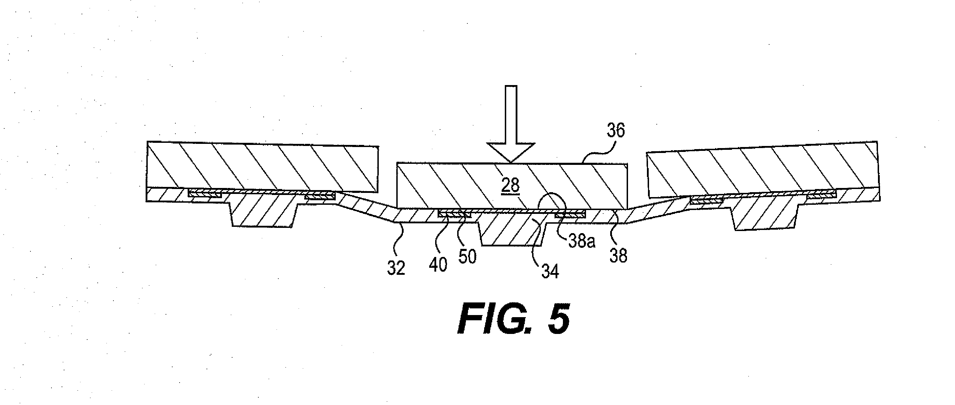

As illustrated in Figs. 5 and 6, when a user of portable electronic device 10 applies a force to engagement surface 36 of a key cap 28 to depress key cap 28, metal grid 30 (see Fig. 3) deforms to permit the corresponding actuation member 34 to be translated from the unactuated position to the actuated position. As only a portion of the actuated key cap 28 is adhered to attachment section 40 of the metal grid 30, connecting elements 42 of the metal grid (not shown) can flex and translate without pulling adjacent key caps 28 towards the interior of the portable electronic device 10. The length of connecting elements 42 involved in key movement is proportional to the length of area of the bottom surface 38 of key caps 28 adhered to each attachment section 40. Thus, metallic grid 30 permits the actuated key cap 28 to move relatively freely in a vertical direction with minimal movement by adjacent key caps 28. This prevents the unintentional actuation of adjacent key caps 28 and actuation members 34, and provides enhanced tactile feel to the user of the portable electronic device. Actuation of key caps 28 of the disclosed "film style" keypad 20 thus may be relatively easy and comfortable for a user of portable electronic device 10.

While specific embodiments have been described in detail, it will be appreciated by those skilled in the art that various modifications and alternatives to those details could be developed in light of the overall teachings of the disclosure. Accordingly, the particular arrangements disclosed are meant to be illustrative only and not limiting.

## Claims

1. A keypad (20) for a portable electronic device (10), comprising:
a keymat (32) having a plurality of actuation members (34);
a plurality of key caps (28), each of the plurality of key caps being associated with a respective one of the plurality of actuation members; and
a metal grid (30) disposed between the plurality of key caps and the keymat,
wherein the metal grid is adhered to a bottom surface (38) of each of the plurality of key caps.

2. The keypad of claim 1, wherein the metal grid includes a plurality of attachment sections (40), and wherein each attachment section defines a through hole (44) that receives one of the plurality of actuation members.

3. The keypad of claim 1, wherein an adhesive (50a, 50b) is disposed on a central portion (38a) of the bottom surface (38) of each key cap of the plurality of key caps to adhere each key cap to the metal grid.

4. The keypad of claim 1, wherein the keymat defines a groove (48) configured to receive the metal grid.

5. They keypad of claim 1, wherein, the metal grid is configured such that, when a key cap is displaced in a vertical direction, the metal grid deforms without substantial movement by adjacent key caps.

6. A keypad (20) for a portable electronic device (10), comprising:
a keymat (20) defining a plurality of actuation members (34);
a metal grid (30) having a plurality of attachment sections (40) arranged in a plurality of columns and a plurality of rows, each attachment section receiving a respective one of the plurality of actuation members; and
a plurality of key caps (28) each having a bottom surface (38) adhered to a respective attachment section of the plurality of attachment sections and to a respective actuation member of the plurality of actuation members.

7. The keypad of claim 6, wherein adjacent attachment sections in each of the plurality of columns and each of the plurality of rows are connected by a respective connecting element (42).

8. The keypad of claim 6, wherein the keypad is configured such that, when a user engages an engagement surface (36) of one of the plurality of key caps, the corresponding attachment section of the plurality of attachment sections and the connecting elements extending therefrom deform to allow vertical movement of the key cap without substantial movement by adjacent key caps.

9. The keypad of claim 6, wherein an adhesive is disposed on a central portion (38a) of the bottom surface of each key cap of the plurality of key caps to adhere each key cap to a respective attachment section of the plurality of attachment sections and to a respective actuation member of the plurality of actuation members.

10. The keypad of claim 6, wherein the metal grid is received in a groove (48) of the keymat.

11. A method of manufacturing a keypad, the method comprising:
forming a metal grid (30) having a plurality of attachment sections (40) arranged in a plurality of columns and a plurality of rows, wherein adjacent attachment sections in each of the plurality of columns and each of the plurality of rows are connected by a respective connecting element (42);
injection molding a keymat (32) that receives the metal grid; and
fixing a key cap (28) to each attachment section of the metal grid.

12. The method of claim 11, wherein fixing includes applying an adhesive (50) to a central portion (38a) of a bottom surface (38) of the key cap.

13. The method of claim 11 wherein each of the plurality of attachment sections includes a through hole (44).

14. The method of claim 11, further including positioning a respective actuation member (34) in the through hole.

15. The method of claim 11, wherein the grid is formed by stamping, casting, photochemical milling, or machining.

## Amended claims

### Amended claims in accordance with Rule 137(2) EPC.

**1.** A keypad (20) for a portable electronic device (10), comprising:
a keymat (32) having a plurality of actuation members (34);
a plurality of key caps (28), each of the plurality of key caps being associated with a respective one of the plurality of actuation members; and
a metal grid (30) disposed between the plurality of key caps and the keymat, wherein the metal grid is adhered to a bottom surface (38) of each of the plurality of key caps.

**2.** The keypad of claim 1, wherein the metal grid includes a plurality of attachment sections (40), and wherein each attachment section defines a through hole (44) that receives one of the plurality of actuation members.

**3.** The keypad of claim 1, wherein an adhesive (50a, 50b) is disposed on a central portion (38a) of the bottom surface (38) of each key cap of the plurality of key caps to adhere each key cap to the metal grid.

**4.** The keypad of claim 1, wherein the keymat defines a groove (48) configured to receive the metal grid.

**5.** They keypad of claim 1, wherein, the metal grid is configured such that, when a key cap is displaced in a vertical direction, the metal grid deforms without substantial movement by adjacent key caps.

**6.** The keypad of claim 1, wherein:
the metal grid (30) has a plurality of attachment sections (40) arranged in a plurality of columns and a plurality of rows, each attachment section receiving a respective one of the plurality of actuation members; and
each of the bottom surfaces (38) of the plurality of key caps (28) is adhered to a respective attachment section of the plurality of attachment sections and to a respective actuation member of the plurality of actuation members.

**7.** The keypad of claim 6, wherein adjacent attachment sections in each of the plurality of columns and each of the plurality of rows are connected by a respective connecting element (42).

**8.** The keypad of claim 6, wherein the keypad is configured such that, when a user engages an engagement surface (36) of one of the plurality of key caps, the corresponding attachment section of the plurality of attachment sections and the connecting elements extending therefrom deform to allow vertical movement of the key cap without substantial movement by adjacent key caps.

**9.** The keypad of claim 6, wherein an adhesive is disposed on a central portion (38a) of the bottom surface of each key cap of the plurality of key caps to adhere each key cap to a respective attachment section of the plurality of attachment sections and to a respective actuation member of the plurality of actuation members.

**10.** The keypad of claim 6, wherein the metal grid is received in a groove (48) of the keymat.

**11.** A method of manufacturing the keypad of any of claims 1 to 10, the method comprising:
forming the metal grid (30);
injection molding the keymat (32); and
adhering a key cap (28) to each attachment section of the metal grid.

**12.** The method of claim 11, wherein fixing includes applying an adhesive (50) to a central portion (38a) of a bottom surface (38) of the key cap.

**13.** The method of claim 11 wherein each of the plurality of attachment sections includes a through hole (44).

**14.** The method of claim 11, further including positioning a respective actuation member (34) in the through hole.

**15.** The method of claim 11, wherein the grid is formed by stamping, casting, photochemical milling, or machining.
